# EUROPÄISCHE PATENTANMELDUNG

(11) **EP 1 898 649 A1**
(43) Veröffentlichungstag der Anmeldung: **12.03.2008**
(21) Anmeldenummer: 07014587.5
(22) Anmeldetag: 25.07.2007
(51) Int. Cl.: H04N 9/64, H04N 9/68, H04N 9/77

(54) **Vorrichtung zur Farbeinstellung für einen Farbmonitor**

(30) Priorität: 06.09.2006 DE 102006042223
(71) Anmelder: Micronas GmbH, 79108 Freiburg (DE)
(72) Erfinder: Flamm, Peter, 79232 March-Buchheim (DE)
(74) Vertreter: Patentanwälte Westphal, Mussgnug & Partner

(57) **Zusammenfassung**

Die Erfindung betrifft eine Vorrichtung zur Farbeinstellung (1) für einen Farbmonitor mit Signaleingängen für ein eingangsseitiges Helligkeitssignal (Y), ein eingangsseitiges Farbartsignal (W) und ein eingangsseitiges Farbsättigungssignal (B) und Signalausgängen für ein ausgangsseitiges Helligkeitssignal (Y'), ein ausgangsseitiges Farbartsignal (W') und ein ausgangsseitiges Farbsättigungssignal (B'), wobei das eingangsseitige Farbartsignal (W) den Winkel und das eingangsseitige Farbsättigungssignal (B) den Betrag eines eingangsseitigen Farbzeigers (Z) definieren und das ausgangsseitige Farbartsignal (W') den Winkel und das ausgangsseitige Farbsättigungssignal (B') den Betrag eines ausgangsseitigen Farbzeigers (Z') in Polarkoordinaten definieren. Dabei ist aus dem eingangsseitigen Helligkeitssignal (Y) ein ausgangsseitiges Helligkeitssignal (Y') erzeugbar. Des Weiteren ist das eingangsseitige Farbartsignal (W) einer ersten Umwandlungseinrichtung (11), durch die ein erstes Signal (21) erzeugbar ist, aus dem das ausgangsseitige Farbartsignal (W') ableitbar ist, zuführbar. Außerdem ist das eingangsseitige Farbartsignal (W) einer zweiten Umwandlungseinrichtung (12), durch die ein zweites Signal (22) erzeugbar ist, zuführbar. Das eingangsseitige Farbsättigungssignal (B) und das zweite Signal (22) sind einer ersten Koppeleinrichtung (31), zuführbar, durch die ein drittes Signal (23) erzeugbar ist, aus dem das ausgangsseitige Farbsättigungssignal (B') abgeleitet werden kann.

## Beschreibung

Die Erfindung betrifft eine Vorrichtung zur Farbeinstellung für einen Farbmonitor mit Signaleingängen für einen eingangsseitiges Helligkeitssignal, ein eingangsseitiges Farbartsignal und ein eingangsseitiges Farbsättigungssignal und Signalausgängen für eine ausgangsseitiges Helligkeitssignal, ein ausgangsseitiges Farbartsignal und ein ausgangsseitiges Farbsättigungssignal, wobei das eingangsseitige Farbartsignal den Winkel und das eingangsseitige Farbsättigungssignal den Betrag eines eingangsseitigen Farbzeigers definieren und das ausgangsseitige Farbartsignal den Winkel und den ausgangsseitige Farbsättigungssignal den Betrag eines ausgangsseitigen Farbzeigers im Polarkoordinaten definieren.

Eine derartige Vorrichtung ist aus der US 2005/0248551 A1 bekannt. In der US 2005/0248551 A1 wird eine Methode zur nichtlinearen Bildverarbeitung beschrieben, bei der ein eingangsseitiges RGB-Signal in Polarkoordinaten umgewandelt, dort nicht linear beeinflusst und in ein ausgangsseitiges PGB-Signal zurückgewandelt wird. In Polarkoordinaten erfolgt eine nichtlineare Beeinflussung eines Sättigungs- und Helligkeitssignals abhängig von einem Farbartsignal. Diese nichtlineare Beeinflussung umfasst mehrere Exponential-, Logarithmus- und Gammafunktionen, deren Kennlinien von einem Mikrokontroller errechnet und in Tabellen hinterlegt, oder durch Rechenwerke bereitgestellt werden.

Nachteilig an dieser beschriebenen Implementierung ist, dass die Signale nur indirekt und über komplizierte Rechenschaltungen unter Hinzuziehung eines Mikrokontrollers beeinflussbar sind.

Ausgehend von diesen Stand der Technik liegt der Erfindung die Aufgabe zugrunde, eine Vorrichtung zur Farbeinstellung für einen Farbmonitor bereitzustellen, bei der die Beeinflussung der Helligkeits-, Farbart- und Farbsättigungssignale in einer einfachen und direkten Art und Weise erfolgt.

Diese Aufgabe wird gelöst durch eine Vorrichtung mit den Merkmalen des Patentanspruchs erste

Vorteilhafte Weiterbildungen der Erfindung sind Gegenstand der Unteransprüche.

Eine Ausführungsform der Erfindung sieht vor, dass aus einem eingangsseitigen Helligkeitssignal ein ausgangsseitiges Helligkeitssignal erzeugbar ist. Das eingangsseitige Farbartsignal ist einer ersten Umwandlungseinrichtung, durch die ein erstes Signal erzeugbar ist, aus dem das ausgangsseitige Farbartsignal ableitbar ist, zuführbar. Des Weiteren ist vorgesehen, dass das eingangsseitige Farbartsignal einer zweiten Umwandlungseinrichtung, durch die ein zweites Signal erzeugbar ist, zuführbar ist. Außerdem sind das eingangsseitige Farbsättigungssignal und das zweite Signal einer ersten Koppeleinrichtung zuführbar, durch die ein drittes Signal erzeugbar ist, aus dem das ausgangsseitige Farbsättigungssignal ableitbar ist.

In einer bevorzugten Ausführungsform erfolgt die Beeinflussung des eingangsseitigen Farbartsignals in der ersten Umwandlungseinrichtung durch eine bevorzugterweise nichtlineare Kennlinie, deren Werte z.B. als eine erste Tabelle in einem Speicher abgelegt sind. Des Weiteren ist vorgesehen, dass die Beeinflussung des eingangsseitigen Farbartsignals in der zweiten Umwandlungseinrichtung bevorzugt durch eine nichtlineare Kennlinie, deren Werte z.B. als eine zweite Tabelle im Speicher abgelegt sind, erfolgt. Es ist außerdem vorgesehen, dass die erste Koppeleinrichtung als Multiplizierer ausgebildet ist.

Diese Ausgestaltungsform hat den Vorteil, dass die Kennlinien für die Umwandlungseinheiten als Tabellen, sogenannten look-up-tables, abgelegt werden können. Die Abspeicherung erfolgt z.B. mit einer 8 Bit Adresse und 8 Bit Daten, was eine Speichergröße vom 256 Byte pro look-up-table entspricht. Die Speicher können je nach Anwendungsform entweder wiederbeschreibbare, sog. RAM-Speicher, oder festprogrammierte, sog. ROM-Speicher, sein. Die Verwendung von ROM-Speichern hat den Vorteil, dass diese nur eine sehr geringe Chipfläche benötigen. Die Verwendung von look-up-tables ist insofern vorteilhaft, als dass keine komplizierten Rechenwerke zur Erzeugung der nichtlinearen Kennlinien für die Umwandlungseinrichtungen notwendig sind.

Eine weitere Ausführungsform der Erfindung sieht vor, dass das eingangsseitige Helligkeitssignal einer dritten und einer vierten Umwandlungseinrichtung zugeführt wird. Die dritte und die vierte Umwandlungseinrichtung beeinflussen das eingangsseitige Helligkeitssignal z.B. nichtlinear, wobei die nichtlinearen Kennlinien bevorzugter Weise in eine dritten und einer vierten look-up-table im Speicher hinterlegt sind. Durch die dritte Umwandlungseinrichtung ist ein viertes Signal erzeugbar, das einer zweiten Koppeleinrichtung, die bevorzugt als Addierer ausgebildet ist, zugeführt wird. Des weiteren wird der zweiten Koppeleinrichtung das in der zweiten Umwandlungseinrichtung erzeugte zweite Signal zugeführt. Durch die zweite Koppeleinrichtung ist ein sechstes Signal, aus welchem das ausgangsseitige Farbartsignal ableitbar ist, erzeugbar. Des Weiteren ist vorgesehen, dass durch die vierte Umwandlungseinheit ein fünftes Signal erzeugbar ist. Das durch die erste Koppeleinrichtung erzeugbare dritte Signal sowie das in der vierten Umwandlungseinrichtung erzeugbare fünfte Signal sind einer dritten Koppeleinrichtung, durch die ein siebtes Signal erzeugbar ist, zuführbar. Aus dem siebten Signal ist das ausgangsseitige Farbsättigungssignal ableitbar. Die dritte Koppeleinrichtung ist bevorzugter Weise als Multiplizierer ausgebildet.

Die Erfindung wird anschließend anhand von Ausführungsbeispielen unter Bezugnahme auf beigefügte Figuren erläutert. Es zeigen:
- Figur 1: ein Blockschaltbild eines ersten Ausführungsbeispiels,
- Figur 2: ein Blockschaltbild eines zweiten Ausführungsbeispiels,
- Figur 3a: eine beispielhafte Kennlinie, und
- Figur 3b: eine Wertetabelle der Kennlinie aus Figur 3a.

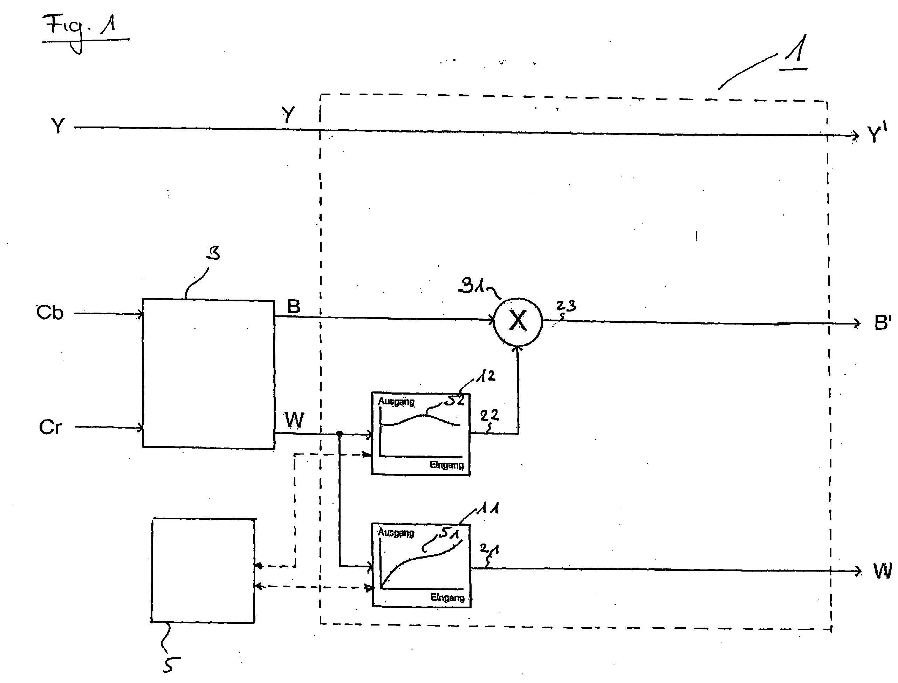

Figur 1 zeigt eine erfindungsgemäße Vorrichtung zur Farbeinstellung 1 mit Signaleingängen für ein eingangsseitiges Helligkeitssignal Y, ein eingangsseitiges Farbsättigungssignal B und ein eingangsseitiges Farbartsignal W sowie Signalausgängen für ein ausgangsseitiges Helligkeitssignal Y', ein ausgangsseitiges Farbsättigungssignal B' sowie ein ausgangsseitiges Farbartsignal W'. Des Weiteren zeigt Figur 1 eine Vorrichtung zur Umwandlung 3, die ausgehend von einem Farbsignal in rechtwinkligen Koordinaten ein Farbsignal im Polarkoordinaten bereitstellt. Der Einrichtung zur Umwandlung 3 werden gemäß Figur 1 ein erstes eingangsseitiges Farbsignal Cb und ein zweites eingangsseitiges Farbsignal Cr zugeführt. Ausgangsseitig sind das eingangsseitige Farbsättigungssignal B und das eingangsseitige Farbartsignal W abgreifbar. Außerdem ist ein Speicher 5 dargestellt.

Gemäß des in Figur 1 dargestellten Ausführungsbeispiels wird das eingangsseitige Helligkeitssignal Y unverändert als ausgangsseitiges Helligkeitssignal Y' zur Verfügung gestellt. Das eingangsseitige Farbartsignal W wird erfindungsgemäß einer ersten Umwandlungseinrichtung 11 zugeführt, die gemäß einer ersten Kennlinie 51 ein erstes Signal 21 zu Verfügung stellt. Die erste Kennlinie 51 ist erfindungsgemäß als sog. look-up-table in einer ersten Tabelle 61 in einem Speicher 5 hinterlegt. Das erste Signal 21 ist am Signalausgang der Vorrichtung zur Farbeinstellung 1 als ausgangsseitiges Farbartsignal W' abgreifbar.

Das eingangsseitige Farbartsignal W wird einer zweiten Umwandlungseinrichtung 12 zugeführt, die gemäß einer zweiten Kennlinie 52 ein zweites Signal 22 bereitstellt. Die zweite Kennlinie 52 ist wiederum als Wertetabelle in einer sog. look-up-table in einer zweiten Tabelle 62 in einem Speicher 5 hinterlegt.

Des Weiteren werden das eingangsseitige Farbsättigungssignal B und das zweite Signal 22 einer ersten Koppeleinrichtung 31, die z.B. als Multiplizierer ausgebildet ist, zugeführt. Durch die Verknüpfung, z.B. Multiplizierung des eingangsseitigen Farbsättigungssignals B und des zweiten Signals 22 wird ein drittes Signal 23 zur Verfügung gestellt, das gemäß Figur 1 als ausgangsseitiges Farbsättigungssignal B' abgreifbar ist.

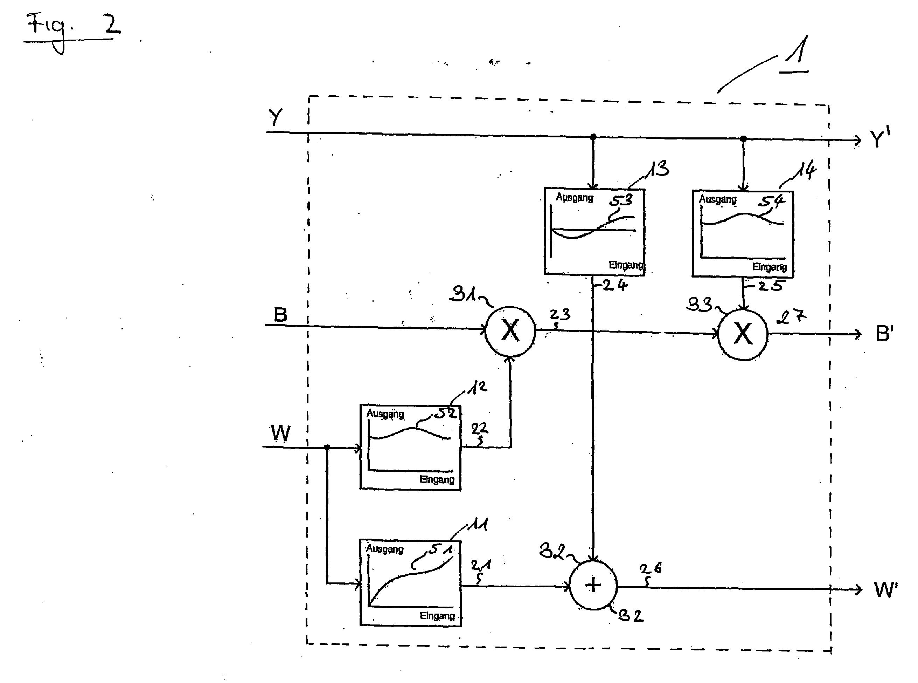

Figur 2 zeigt eine Vorrichtung zur Farbeinstellung 1 wie sie in Figur 1 beschrieben ist, die jedoch zunächst durch eine dritte Umwandlungseinrichtung 13, eine vierte Umwandlungseinrichtung 14, eine zweite Koppeleinrichtung 32 und eine dritte Koppeleinrichtung 33 erweitert ist. Die aus Figur 1 bekannte Einrichtung zur Umwandlung 3 und der Speicher 5 sind in Figur 2 aus Übersichtlichkeitsgründen nicht mehr dargestellt.

In Figur 2 wird das eingangsseitige Helligkeitssignal Y sowohl der dritten Umwandlungseinrichtung 13 als auch der vierten Umwandlungseinrichtung 14 zugeführt. Die dritte Umwandlungseinrichtung 13 stellt gemäß einer dritten Kennlinie 53 ein viertes Signal 24 zur Verfügung. Die dritte Kennlinie 53 ist als Wertetabelle in einer dritten Tabelle 63 im Speicher 5 hinterlegt. Das erste Signal 21 und das vierte Signal 24 einer zweiten Koppeleinrichtung 32, die z.B. als Addierer ausgebildet ist, und ein sechstes Signal 26 zur Verfügung stellt, zugeführt. Gemäß Figur 2 ist das sechste Signal 26 als ausgangsseitiges Farbartsignal W' abgreifbar. Die vierte Umwandlungseinrichtung 14 beeinflusst das eingangsseitige Helligkeitssignal Y gemäß einer vierten Kennlinie 54 derart, dass an ihrem Ausgang ein fünftes Signal 25 zu Verfügung steht. Die vierte Kennlinie 54 ist wiederum als eine Wertetabelle in einer vierten Tabelle 64 im Speicher 5 hinterlegt. Gemäß Figur 2 werden das dritte Signal 23 und das fünfe Signal 25 einer dritten Koppeleinrichtung 33, die z.B. als Multiplizierer ausgeführt ist, und ein siebtes Signal 27 zu Verfügung stellt, zugeführt. Das siebte Signal 27 ist als ausgangsseitiges Farbsättigungssignal B' abgreifbar.

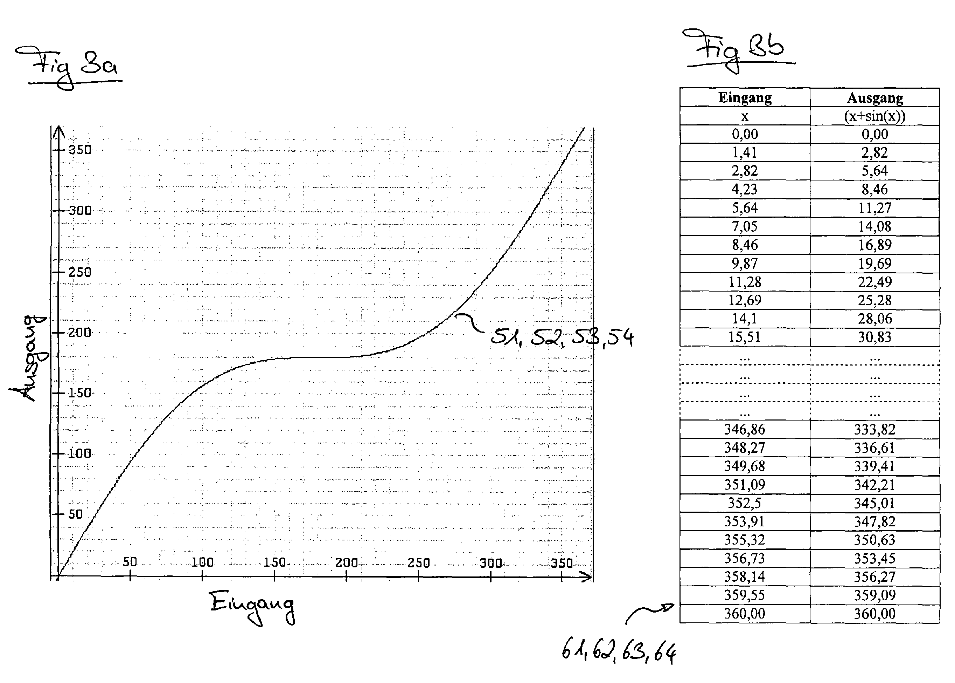

Figur 3a zeigt eine beispielhafte Kennlinie 51, 52, 53, 54 wie sie in den Umwandlungseinrichtungen 11, 12, 13, 14 verwendet werden kann. Die in Figur 3a dargestellte Kennlinie 51, 52, 53, 54 entspricht der Funktion x + sin (x), wie sie beispielsweise in der ersten Umwandlungseinrichtung 11 zu Erzeugung des ersten Signals 21 verwendet werden kann. Die Kennlinie 51, 52, 53, 54 ordnet in ihrem Definitionsbereich, der beispielsweise 0°-360° sein kann, jedem Eingangswert einen Ausgangswert in ihrem Wertebereich, der beispielsweise wiederum 0°-360° betragen kann, zu. Die in Figur 3 dargestellte Kennlinie 51, 52, 53, 54 weist in ihrem mittleren Bereich eine Abflachung auf, wie sie beispielsweise zu sog. flesh-tone-correction verwendet wird. Bei der flesh-tone-correction wird einem eingangsseitigen Intervall von Farbartsignalen ein kleineres ausgangsseitiges Intervall von Farbartsignalen zugeordnet, so dass vom Hautton leicht abweichende Farbwerte auf einen einheitlichen Hautton abgebildet werden.

Figur 3b zeigt eine Wertetabelle der in Figur 3a dargestellten Kennlinie 51, 52, 53, 54 die beispielsweise als look-up-table in einem Speicher hinterlegt werden kann. Die in der look-up-table hinterlegten Werte können beispielsweise mit 8 Bit quantisiert sein, was dann 256 Quantisierungsstufen für die in Figur 3a dargestellte Kennlinie 51 ,52, 53, 54, entspricht.

In der Praxis werden die Kennlinie 51, 52, 53 und 54 sowie die zugehörenden Wertetabellen jeweils unterschiedlich sein.

### Bezugszeichenliste

- 1: Vorrichtung zur Farbeinstellung

- 3: Vorrichtung zur Umwandlung

- 5: Speicher

- 11: erste Umwandlungseinrichtung
- 12: zweite Umwandlungseinrichtung
- 13: dritte Umwandlungseinrichtung
- 14: vierte Umwandlungseinrichtung

- 21: Erstes Signal
- 22: Zweites Signal
- 23: Drittes Signal
- 24: viertes Signal
- 25: fünftes Signal
- 26: sechstes Signal
- 27: siebtse Signal

- 31: erste Koppeleinrichtung
- 32: zweite Koppeleinrichtung
- 33: dritte Koppeleinrichtung

- 51: erste Kennlinie
- 52: zweite Kennlinie
- 53: dritte Kennlinie
- 54: vierte Kennlinie

- 61: erste Tabelle
- 62: zweite Tabelle
- 63: dritte Tabelle
- 64: vierte Tabelle

- Y: eingangsseitiges Helligkeitssignal
- B: eingangsseitiges Farbsättigungssignal
- W: eingangsseitiges Farbartsignal
- Y': ausgangsseitiges Helligkeitssignal
- B': ausgangsseitiges Farbsättigungssignal
- W': ausgangsseitiges Farbartsignal
- Z: eingangsseitiger Farbzeiger
- Z': ausgangsseitiger Farbzeiger

- Cb: erstes eingangsseitiges Farbsignal
- Cr: zweites eingangsseitiges Farbsignal

## Patentansprüche

1. Vorrichtung zur Farbeinstellung (1) für einen Farbmonitor mit Signaleingängen für ein eingangsseitiges Helligkeitssignal (Y), ein eingangsseitiges Farbartsignal (W) und ein eingangsseitiges Farbsättigungssignal (B) und Signalausgängen für ein ausgangsseitiges Helligkeitssignal (Y'), ein ausgangsseitiges Farbartsignal (W') und ein ausgangsseitiges Farbsättigungssignal (B'), wobei das eingangsseitige Farbartsignal (W) den Winkel und das eingangsseitige Farbsättigungssignal (B) den Betrag eines eingangsseitigen Farbzeigers (Z) definieren und das ausgangsseitige Farbartsignal (W') den Winkel und das ausgangsseitige Farbsättigungssignal (B') den Betrag eines ausgangsseitigen Farbzeigers (Z') in Polarkoordinaten definieren
**gekennzeichnet durch** die weiteren Merkmale:
- aus dem eingangsseitigen Helligkeitssignal (Y) ist ein ausgangsseitiges Helligkeitssignal (Y') erzeugbar,
- das eingangsseitige Farbartsignal (W) ist einer ersten Umwandlungseinrichtung (11), **durch** die ein erstes Signal (21) erzeugbar ist, aus dem das ausgangsseitige Farbartsignal (W') ableitbar ist, zuführbar
- das eingangsseitige Farbartsignal (W) ist einer zweiten Umwandlungseinrichtung (12), **durch** die ein zweites Signal (22) erzeugbar ist zuführbar,
- das eingangsseitige Farbsättigungssignal (B) und das zweite Signal (22) sind einer ersten Koppeleinrichtung (31), **durch** die ein drittes Signal (23) erzeugbar ist, aus dem das ausgangsseitige Farbsättigungssignal (B') ableitbar ist, zuführbar.

2. Vorrichtung zur Farbeinstellung (1) nach Anspruch 1
**dadurch gekennzeichnet, dass**
das Signal (21) durch eine Beeinflussung des eingangsseitigen Farbartsignals (W) mit einer ersten Kennlinie (51) erzeugbar ist.

3. Vorrichtung zur Farbeinstellung (1) nach Anspruch 2,
**dadurch gekennzeichnet, dass**
die erste Kennlinie (51) zur Erzeugung des ersten Signals (21) nichtlinear ist.

4. Vorrichtung zur Farbeinstellung (1) nach Anspruch 2 oder 3,
**dadurch gekennzeichnet, dass**
die erste Kennlinie (51) als eine erste Tabelle (61) in einem Speicher (5) hinterlegt ist.

5. Vorrichtung zur Farbeinstellung (1) nach einem der vorstehenden Ansprüche,
**dadurch gekennzeichnet, dass**
das zweite Signal (22) durch eine Beeinflussung des eingangsseitigen Farbartsignals (W) mit einer zweiten Kennlinie (52) erzeugbar ist.

6. Vorrichtung zur Farbeinstellung (1) nach Anspruch 6,
**dadurch gekennzeichnet, dass**
die zweite Kennlinie (52) zur Erzeugung nichtlinear ist.

7. Vorrichtung zur Farbeinstellung (1) nach Anspruch 6 oder 7,
**dadurch gekennzeichnet, dass**
die zweite Kennlinie (52) als eine zweite Tabelle (62) in einem Speicher (5) hinterlegt ist.

8. Vorrichtung zur Farbeinstellung (1) nach Anspruch einem der vorgehenden Ansprüche,
**dadurch gekennzeichnet, dass**
die erste Koppeleinrichtung (31) ein Multiplizierer ist

9. Vorrichtung zur Farbeinstellung (1) nach einem der vorstehenden Ansprüche,
**gekennzeichnet durch** die Merkmale:
- das eingangsseitige Helligkeitssignal (Y) ist einer dritten Umwandlungseinrichtung (13), mit der ein viertes Signal (24) erzeugbar ist, zuführbar,
- das eingangsseitige Helligkeitssignal (Y) ist einer vierten Umwandlungseinrichtung (14), mit der ein fünftes Signal (25) erzeugbar ist zuführbar,
- das zweite Signal (22) und das vierte Signal (24) sind einer zweiten Koppeleinrichtung (32), mit der ein sechstes Signal (26), aus dem das ausgangsseitige Farbartsignal (W') ableitbar ist, zuführbar, und
- das dritte Signal (23) und das fünfte Signal (25) sind einer dritten Koppeleinrichtung (33), mit der das ausgangsseitige Farbsättigungssignal (B') ableitbar ist, zuführbar.

10. Vorrichtung zur Farbeinstellung (1) nach Anspruch 9,
**gekennzeichnet durch** die Merkmale:
- eine dritte Kennlinie (53) zur Erzeugung des vierten Signals (24) ist als eine dritte Tabelle in einem Speicher (5) hinterlegt,
- eine vierte Kennlinie (54) zur Erzeugung des fünften Signals (25) ist als eine vierte Tabelle in einem Speicher (5) hinterlegt,
- die zweite Koppeleinrichtung (32) ist ein Addierer, und
- die dritte Koppeleinrichtung (33) ist ein Multiplizierer.
